# DEMANDE DE BREVET EUROPEEN

(11) **EP 0 894 675 A1**
(43) Date de publication de la demande: **03.02.1999**
(21) Numéro de dépôt: 98401782.2
(22) Date de dépôt: 15.07.1998
(51) Int. Cl.: B60R 19/18

(54) **Pare-chocs pour véhicule automobile et procédés de fabrication de ce pare-chocs**

(30) Priorité: 28.07.1997 FR 9709593
(71) Demandeur: ECIA - EQUIPEMENTS ET COMPOSANTS POUR L'INDUSTRIE AUTOMOBILE, F-25400 Audincourt (FR)
(72) Inventeur: Pata, Martial, 25700 Valentigney (FR); Rapy, Pierre-Yves, 90000 Belfort (FR); Laurent, Claude, 25420 Voujeaucourt (FR)
(74) Mandataire: de la Bigne, Guillaume Michel Marie

(57) **Abrégé**

Le pare-chocs comporte une poutre (14) destinée à être reliée à deux longerons (16, 18) par l'intermédiaire de deux organes d'absorption d'énergie (20, 22). La poutre (14) à une forme générale courbe délimitée par une paroi avant (24) de courbure sortante et une paroi arrière (26) de courbure rentrante. Chaque organe d'absorption d'énergie (20, 22) est relié à la poutre (14) par des moyens (32, 34) formant une liaison encastrement. Ces moyens de liaison (32, 34) ont une forme générale évasée s'élargissant vers la paroi arrière (26) de la poutre. Cette forme générale évasée est délimitée par deux parois latérales courbes intérieure (36, 38) et extérieure (40, 42) reliées à la paroi arrière (26) de la poutre. Les parois latérales intérieures (36, 38) des moyens de liaison (32, 34) délimitent avec la paroi arrière (26) de la poutre une arche de courbure rentrante.

## Description

La présente invention concerne un pare-chocs pour véhicule automobile et des procédés de fabrication de ce pare-chocs.

On connaît déjà dans l'état de la technique un pare-chocs pour véhicule automobile, du type comprenant une poutre destinée à être reliée à deux longerons du véhicule par l'intermédiaire de deux organes d'absorption d'énergie, la poutre ayant une forme générale courbe dans un plan sensiblement horizontal délimitée par une paroi avant de courbure sortante et une paroi arrière de courbure rentrante reliée aux organes d'absorption d'énergie.

De façon classique, on distingue trois plages de vitesses du véhicule pour lesquelles on souhaite obtenir certains comportements du véhicule lors d'un choc avant. Ces comportements résultent notamment des caractéristiques de déformation du pare-chocs.

Pour une première plage de vitesses faibles, inférieures à 4 km/h, on souhaite que la poutre du pare-chocs se déforme élastiquement (test du choc-pendule ou du choc contre un mur).

Pour une seconde plage de vitesses moyennes, comprises entre 4 et 15 km/h, on souhaite que la poutre et les organes d'absorption d'énergie du pare-chocs se déforment plastiquement sans entraîner de déformation des longerons (test du choc sur mur décalé à 15 km/h). La poutre et les organes d'absorption d'énergie pourront être remplacés à la suite du choc.

Pour une troisième plage de vitesses élevées, comprises entre 15 et 56 km/h, on souhaite obtenir une déformation non agressive du véhicule, notamment de la poutre, des organes d'absorption d'énergie et des longerons de ce véhicule (test du choc sur barrière déformable à 56 km/h).

Habituellement, les organes d'absorption d'énergie sont reliés à la poutre par des moyens formant des liaisons pivots. Les liaisons pivots permettent la déformation élastique de la poutre dans le cas de chocs à vitesses faibles.

Cependant, dans le cas de chocs à vitesses moyennes, les liaisons pivots ont tendance à provoquer un désalignement des organes d'absorption d'énergie et des longerons qui les portent. Plus particulièrement, les organes d'absorption ont tendance à s'écarter ou à se rapprocher l'un de l'autre.

Dans le cas de chocs à vitesses élevées, le désalignement s'accentue, si bien que les longerons ont tendance à se déplacer par rapport à leur axe avant déformation. Par ailleurs, dans le cas de chocs à vitesses élevées, les liaisons pivots se comportent comme des organes perforants qui augmentent considérablement l'agressivité du véhicule.

L'invention a pour but de mieux contrôler la déformation du pare-chocs, notamment dans le cas de chocs à vitesses moyennes et élevées de manière à conserver l'alignement des absorbeurs et des longerons, la déformation du pare-chocs permettant une bonne absorption de l'énergie d'un choc, sans augmentation de l'agressivité du véhicule.

A cet effet, l'invention a pour objet un pare-chocs pour véhicule automobile du type précité, caractérisé en ce que chaque organe d'absorption d'énergie est relié à la poutre par des moyens formant une liaison encastrement, ces moyens de liaison ayant une forme générale évasée dans un plan sensiblement horizontal, cette forme évasée s'élargissant vers la paroi arrière de la poutre et étant délimitée par deux parois latérales courbes intérieure et extérieure reliées à la paroi arrière de la poutre, les parois latérales intérieures des moyens de liaison délimitant avec la paroi arrière de la poutre une arche de courbure rentrante sans point anguleux.

Suivant des caractéristiques de différents modes de réalisation de ce pare-chocs :
- la poutre, les organes d'absorption et les moyens de liaison ont chacune une forme générale en caisson de section transversale sensiblement polygonale ;
- les moyens de liaison sont venus de matière avec la poutre et les organes d'absorption d'énergie ;
- la paroi arrière de la poutre comporte, d'une part, une partie centrale se prolongeant par les parois latérales intérieures des moyens de liaison et des parois latérales intérieures des organes d'absorption d'énergie, et d'autre part, deux parties d'extrémité se prolongeant par les parois latérales extérieures des moyens de liaison et des parois latérales extérieures des organes d'absorption d'énergie ;
- la poutre, les organes d'absorption d'énergie et les moyens de liaison comprennent deux parois communes de dessus et de dessous, sensiblement planes, reliant les parois avant et arrière de la poutre et fixées sur des saillies de liaison de ces parois avant et arrière ;
- le pare-chocs comporte un organe en caisson d'une seule pièce, ayant la forme générale de la poutre, les parois latérales intérieures des moyens de liaison et des organes d'absorption d'énergie ainsi que la partie centrale de la paroi arrière de la poutre étant formées par les extrémités d'une paroi arrière de l'organe en caisson partiellement séparées de cet organe en caisson, les parois latérales extérieures des moyens de liaison et des organes d'absorption d'énergie ainsi que les parties d'extrémité de la paroi arrière de la poutre étant formées par deux éléments fixés sur des bords découpés de parois de dessus et de dessous de l'organe en caisson adjacentes à la paroi arrière de cet organe en caisson ;
- les moyens de liaison sont venus de matière avec les organes d'absorption d'énergie ;
- la poutre est constituée par un organe en caisson d'une seule pièce, les organes d'absorption d'énergie sont munis de parois latérales prolongées par les parois latérales des moyens de liaison, et chaque organe d'absorption d'énergie est constitué par un organe en caisson d'une seule pièce, les moyens de liaison étant constitués par une extrémité de cet organe en caisson évasée et fixée sur la poutre ;
- les moyens de liaison sont venus ce matière avec la poutre ;
- la poutre est constituée par un organe en caisson d'une seule pièce, et chaque organe d'absorption d'énergie est constitué par un organe en caisson d'une seule pièce fixé sur les moyens de liaison correspondants venus de matière avec la poutre.

L'invention a également pour objet des procédés pour la fabrication du pare-chocs tel que défini ci-dessus.

Selon un premier procédé :
- on réalise et on courbe quatre éléments métalliques formant, le premier, la paroi avant de la poutre, le second, la partie centrale de la paroi arrière de la poutre et les parois latérales intérieures des moyens de liaison et des organes d'absorption d'énergie, et les troisième et quatrième, les deux parties d'extrémité de la paroi arrière de la poutre et les parois latérales extérieures des moyens de liaison et des organes d'absorption d'énergie,
- on découpe deux éléments sensiblement plats en tôle métallique formant les parois communes de dessus et de dessous, et
- on fixe les éléments extrudés et découpés les uns aux autres.

Selon un second procédé :
- on réalise un organe métallique en caisson,
- on courbe cet organe en caisson pour lui donner la forme générale de la poutre,
- on sépare partiellement de l'organe en caisson les extrémités d'une paroi arrière de cet organe en caisson par découpage partiel de parois de dessus et de dessous de l'organe en caisson adjacentes à la paroi arrière de cet organe en caisson,
- on courbe les extrémités partiellement séparées,
- on réalise et on courbe deux éléments métalliques formant les parois latérales extérieures des moyens de liaison et des organes d'absorption d'énergie ainsi que les parties d'extrémité de la paroi arrière de la poutre, et
- on fixe les éléments extrudés sur des bords découpés des parois de dessus et de dessous de l'organe en caisson.

Selon un troisième procédé :
- on réalise et on courbe un premier organe métallique en caisson formant la poutre,
- on réalise des premier et troisième organes métalliques en caisson formant les organes d'absorption d'énergie et les moyens de liaison, ces moyens de liaison étant formés en évasant une extrémité des deuxième et troisième organes en caisson par hydroformage ou séparation partielle de parois latérales de cette extrémité, et
- on fixe les trois organes en caisson les uns aux autres.

Selon un quatrième procédé :
- on réalise et on courbe un organe métallique en caisson formant la poutre,
- on réalise des deuxième et troisième organes métalliques en caisson formant les organes d'absorption d'énergie, et
- on fixe les trois organes en caisson les uns aux autres.

L'invention sera mieux comprise à la lecture de la description qui va suivre, donnée uniquement à titre d'exemple et faite en se référant aux dessins dans lesquels :
- la figure 1 est une vue en perspective schématique d'un pare-chocs de véhicule automobile selon un premier mode de réalisation de l'invention;
- la figure 2 est une vue de dessus de la poutre du pare-chocs illustrée sur la figure 1;
- la figure 3 est une vue partielle en perspective de la poutre illustrée sur la figure 2;
- la figure 4 est une vue en coupe, à l'échelle agrandie, suivant la ligne 4 - 4 de la figure 2;
- la figure 5 est une vue similaire à la figure 4 d'une variante de réalisation de la poutre illustrée sur la figure 2;
- la figure 6 est une vue similaire à la figure 2 d'une poutre selon un second mode de réalisation de l'invention;
- la figure 7 est une vue partielle en perspective de la poutre illustrée sur la figure 6;
- la figure 8 est une vue similaire à la figure 7 d'une variante de réalisation de la poutre illustrée à la figure 6;
- la figure 9 est une vue similaire à la figure 2 d'une poutre selon un troisième mode de réalisation d'invention;
- la figure 10 est une vue partielle en perspective de la poutre illustrée en figure 9;
- la figure 11 est une vue similaire à la figure 2 d'une poutre selon un quatrième mode de réalisation de l'invention;
- la figure 12 est une vue en coupe, à l'échelle agrandie, suivant la ligne 12 - 12 de la figure 11;
- la figure 13 est une vue en coupe, à échelle agrandie, suivant la ligne 13 - 13 suivant de la figure 11.

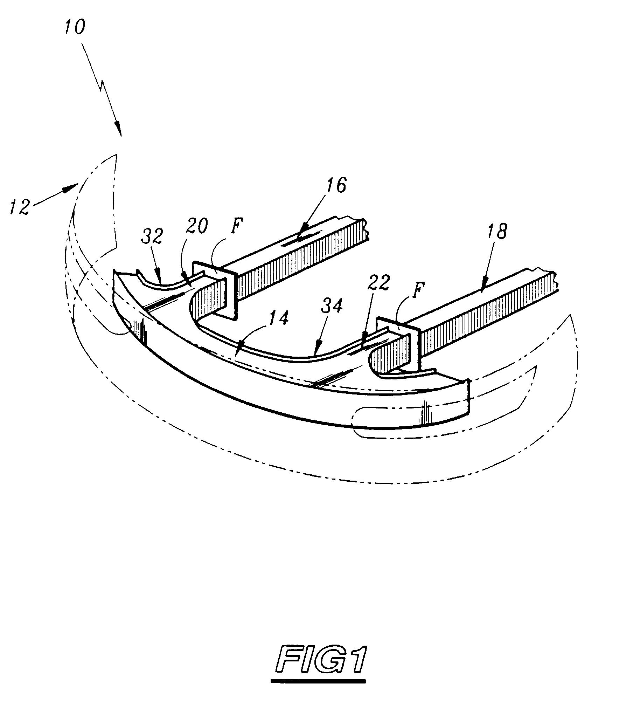

On a représenté sur la figure 1 un pare-chocs avant pour véhicule automobile, selon un premier mode de réalisation de l'invention, désigné par la référence générale 10.

De façon classique , le pare-chocs 10 comporte une peau 12 ou coque, représenté en traits mixtes sur la figure 1, porté par une poutre 14. Cette dernière est reliée à deux longerons 16, 18 du véhicule par l'intermédiaire de deux organes 20, 22 d'absorption d'énergie.

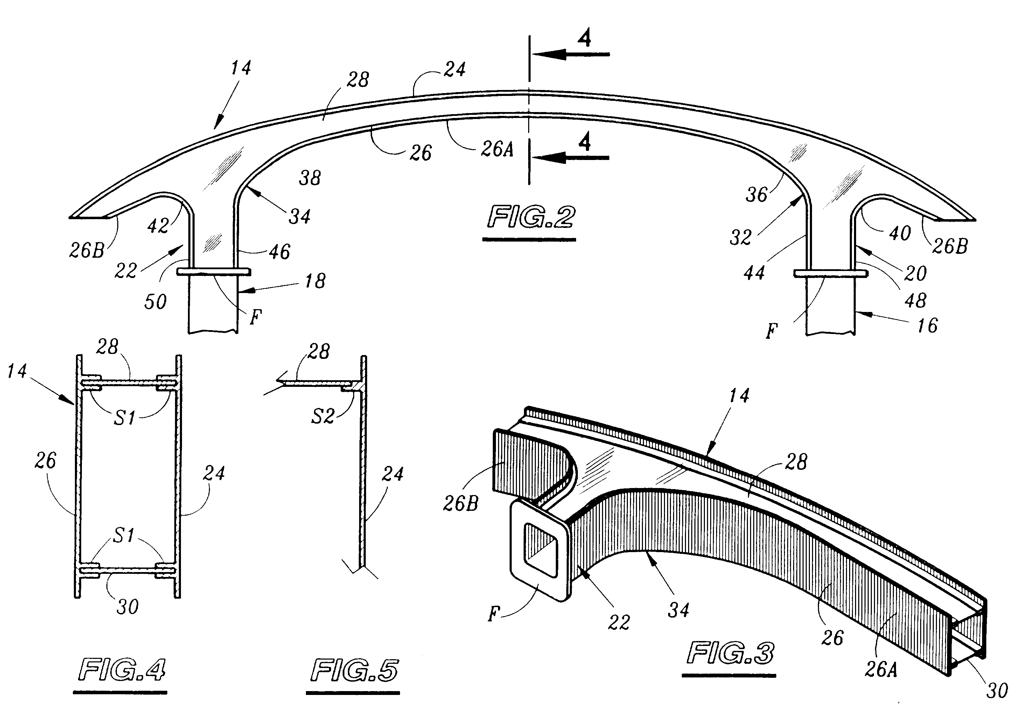

La poutre 14 et les organes d'absorption d'énergie 20, 22 sont représentés plus en détail sur les figures 2 à 4.

De préférence, la poutre 14 et les organes d'absorption 20, 22 ont chacun une forme générale en caisson de section transversale sensiblement polygonale, par exemple, rectangulaire, comme dans l'exemple illustré.

Le contour de la section transversale de la poutre 14 et des organes d'absorption d'énergie 20, 22 est fermé (comme dans l'exemple illustré) ou ouvert.

La poutre 14 a une forme générale courbe dans un plan sensiblement horizontal (plan de la figure 2). Cette forme courbe est délimitée par une paroi avant 24 de courbure sortante et une paroi arrière 26, par exemple sensiblement verticale, de courbure rentrante, reliée aux organes d'absorption d'énergie 20, 22. La poutre 14 comporte également deux parois sensiblement planes de dessus 28 et de dessous 30 reliant les parois avant 24 et arrière 26.

Chaque organe d'absorption d'énergie 20, 22 est relié à la poutre 14 par des moyens 32, 34 formant une liaison encastrement (encore appelée liaison fixe). Ces moyens de liaison ont une forme générale évasée dans un plan sensiblement horizontal s'élargissant vers la paroi arrière 26 de la poutre. Cette forme générale évasée est délimitée par deux parois latérales courbes intérieure 36, 38 et extérieure 40, 42, par exemple sensiblement verticales, reliées à la paroi arrière 26 de la poutre.

De préférence les moyens de liaison 32, 34 ont une forme générale en caisson semblable à celle de la poutre 14 et des organes d'absorption d'énergie.

Les organes d'absorption d'énergie 20, 22 sont reliés aux longerons 16, 18 à l'aide de moyens classiques comportant par exemple des flasques F transversaux aux organes d'absorption d'énergie.

On notera, d'une part, que la paroi arrière 26 de la poutre 14 comporte une partie centrale 26A, s'étendant entre les deux organes d'absorption d'énergie 20, 22, et deux parties d'extrémité 26B s'étendant à l'opposé l'une de l'autre, et d'autre part, que les parois latérales intérieures 36, 38 des moyens de liaison 32, 34 délimitent avec la partie centrale 26A de la paroi arrière de la poutre une arche de courbure rentrante sans point anguleux.

Dans le premier mode de réalisation de l'invention illustré sur les figures 1 à 4, les moyens de liaison 32, 34 sont venus de matière avec les organes d'absorption d'énergie 20, 22 et la poutre 14.

Dans ce cas, la partie centrale 26A de la paroi arrière de la poutre se prolonge par les parois latérales intérieures 36, 38 des moyens de liaison 34 et des parois latérales intérieures 44, 46, par exemple sensiblement verticales, des organes d'absorption d'énergie 20, 22. Par ailleurs, les deux parties d'extrémité 26B de la paroi arrière de la poutre se prolongent par les parois latérales extérieures 40, 42 des moyens de liaison 32, 34 et des parois latérales extérieures 48, 50, par exemple sensiblement verticales, des arcanes d'absorption d'énergie 20, 22.

On notera que les parois latérales des organes d'absorption d'énergie 20, 22 sont sensiblement rectilignes et parallèles à l'axe des longerons 16, 18.

Les parois de dessus 28 et de dessous 30 de la poutre 14 sont communes à cette poutre, aux organes d'absorption d'énergie 20, 22 et aux moyens de liaison 32, 34. Ces parois de dessus 28 et de dessous 30 sont fixées sur des saillies de liaison venues de matière avec les parois avant 20 et air 26 de la poutre.

Sur la figure 4, on a représenté des saillies de liaison S1 délimitant une gorge d'emboîtement des bords des parois de dessus 28 et de dessous 30.

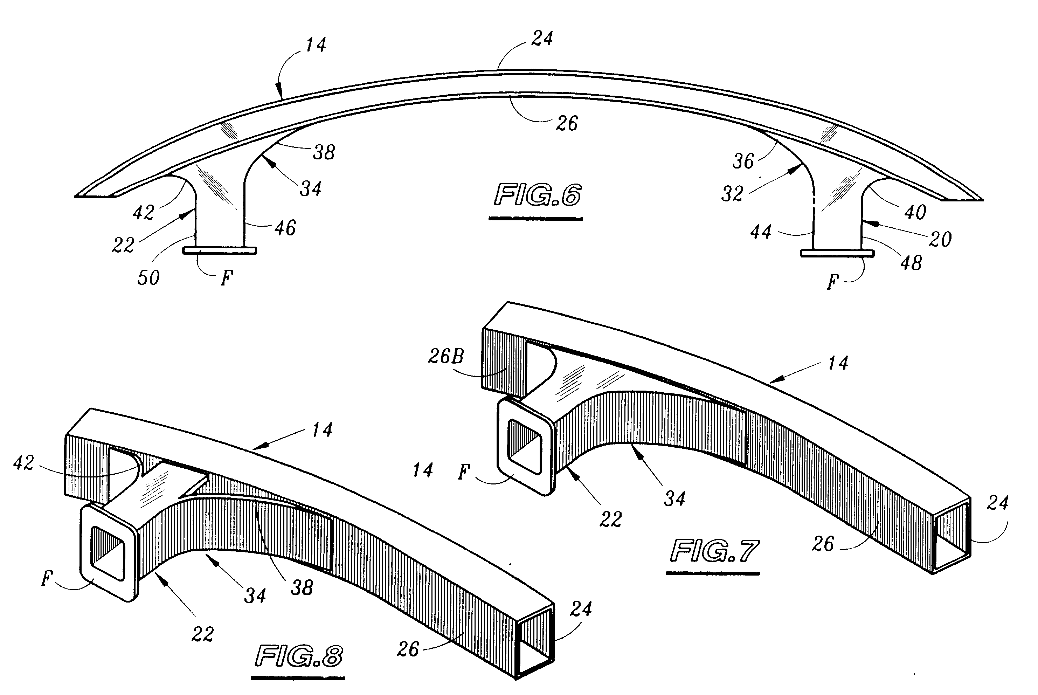

Sur la figure 5, on a représenté une variante de réalisation des saillies de liaison S2 délimitant une feuillure d'appui des bords des parois de dessus 28 et de dessous 30.

Pour fabriquer le pare-chocs selon le premier mode de réalisation de l'invention, de préférence, on extrude et on courbe quatre éléments métalliques formant, le premier, la paroi avant 24 de la poutre, le second, la partie centrale 26A de la paroi arrière de la poutre et les parois latérales intérieures 36, 38, 44, 46 des moyens de liaison 32, 34 et des organes d'absorption d'énergie 20, 22, et les troisième et quatrième, les deux parties d'extrémité 26B de la paroi arrière de la poutre et les parois latérales extérieures 40, 42, 48, 50 des moyens de liaison 32, 34 et des organes d'absorption d'énergie 20, 22.

Ces éléments métalliques peuvent également être réalisés autrement que par extrusion.

Par ailleurs, on découpe, par exemple par emboutissage, deux éléments sensiblement plats en tôle métallique formant les parois de dessus 28 et de dessous 30.

Enfin, on fixe les uns aux autres les éléments extrudés, et découpés, notamment par soudage ou collage.

On décrira ci-dessous d'autres modes de réalisation de l'invention en se référant aux figures 6 à 13. Sur ces figures, les éléments analogues à ceux des figures 1 à 5 sont désignés par des références identiques.

Les figures 6 et 7 illustrent un second mode de réalisation de l'invention.

Dans ce cas, les moyens de liaison 32, 34 sont venus de matière avec les organes d'absorption d'énergie 20, 22.

Comme dans le premier mode de réalisation de l'invention, les parois latérales 44 à 50 des organes d'absorption d'énergie 20, 22 sont prolongées par les parois latérales 36 à 42 des moyens de liaison 32, 34.

La poutre 14 est constituée par un organe en caisson d'une seule pièce. De même, les organes d'absorption d'énergie 20, 22 sont constitués chacun par un organe en caisson d'une seule pièce. Les moyens de liaison 32, 34 de chaque organe en caisson 20, 22 sont constitués par une extrémité de cet organe en caisson évasée et fixée sur la poutre 14.

Pour fabriquer un pare-chocs selon le second mode de réalisation de l'invention, de préférence, on extrude et on courbe un premier organe en caisson formant la poutre 14, et on extrude des deuxième et troisième organes en caisson formant les organes d'absorption d'énergie 20, 22. Les moyens de liaison 32, 34 sont formés en évasant une extrémité des deuxième et troisième organes en caisson par hydroformage.

Les trois organes en caisson peuvent également être réalisés autrement que par extrusion.

Les trois organes en caisson sont fixés les uns aux autres, par exemple par soudage, collage, rivetage ou clinchage.

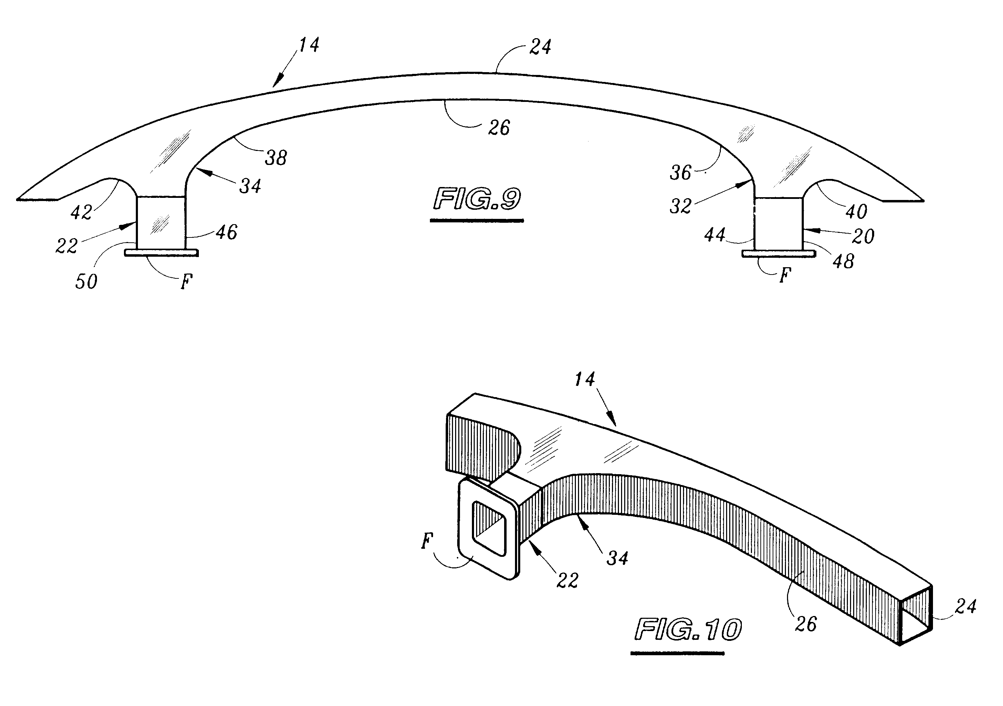

Sur la figure 8, on a représenté une variante de réalisation des moyens de liaison 32, 34. Selon cette variante, les moyens de liaison sont formés en évasant une extrémité des deuxième et troisième organes en caisson par séparation partielle de parois latérales de cette extrémité du reste des deuxième et troisième caissons.

Les figures 9 et 10 illustrent un troisième mode de réalisation de l'invention.

Dans ce cas, les moyens de liaison 32, 34 sont venus de matière avec la poutre 14.

Pour fabriquer un pare-chocs selon le troisième mode de réalisation de l'invention, de préférence, on extrude et on courbe un premier organe métallique en caisson d'une seule pièce formant la poutre 14 et on forme les moyens de liaison 32, 34 sur cette poutre par hydroformage de cette dernière.

Par ailleurs, on extrude des deuxième et troisième organes métalliques en caisson, chacun d'une seule pièce formant les organes d'absorption d'énergie 20, 22.

Les trois organes en caisson peuvent également être réalisés autrement que par extrusion.

Les organes d'absorption d'énergie sont fixés sur les moyens de liaison 32, 34 correspondants venus de matière avec la partie 14, par exemple par soudage, collage, rivetage ou clinchage.

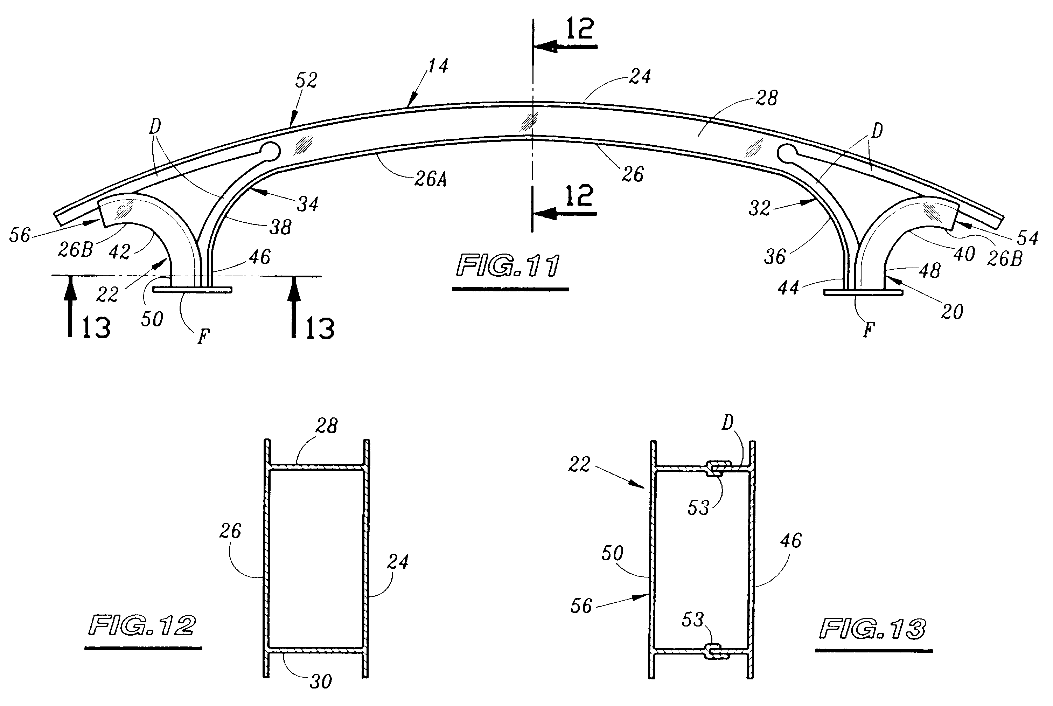

Les figures 11 à 13 illustrent un quatrième mode de réalisation de l'invention.

Dans ce cas, comme dans le premier mode de réalisation de l'invention, les moyens de liaison 32, 34 sont venus de matière avec la poutre 14 et les organes d'absorption d'énergie 20, 22.

Pour fabriquer le pare-chocs selon le quatrième mode de réalisation de l'invention, on extrude un organe métallique en caisson 52 d'une seule pièce et on le courbe pour lui donner la forme générale de la poutre 14. Cet organe en caisson peut également être réalisé autrement que par extrusion.

Puis, on sépare partiellement de l'organe en caisson 52 et on courbe les extrémités d'une paroi arrière de cet organe 52 de manière à former la partie centrale 26A de la paroi arrière de la poutre prolongée par les parois latérales intérieures 36, 38, 44, 46 des moyens de liaison 32, 34 et des organes d'absorption d'énergie 20, 22. La séparation des extrémités de la paroi arrière de l'organe en caisson 52 est réalisée par découpage partiel de parois de dessus et de dessous de l'organe en caisson 52 adjacentes à la paroi arrière de cet organe 52.

Par ailleurs, on extrude et on courbe deux éléments métalliques 54, 56. Ces éléments 54, 56, qui peuvent également être réalisés autrement que par extrusion, sont fixés sur des bords découpés D des parois de dessus et de dessous de l'organe en caisson 52 de manière à former les parois latérales extérieures 40, 42, 48, 50 des moyens de liaison 32, 34 et des organes d'absorption d'énergie 20, 22.

Les éléments rapportés 54, 56 comportent de préférence des saillies de liaison S3 délimitant des gorges d'emboîtement sur les bords découpés D. Ces bords découpés D sont fixés dans les saillies S3, par exemple par soudage, collage, rivetage ou clinchage.

Parmi les avantages de l'invention, on notera les suivants.

Les courbures de la poutre 14 et des moyens de liaison 32, 34 permettent d'obtenir la déformation élastique souhaitée pour un choc à vitesse faible inférieure à 4 km/h. Par ailleurs, la courbure des moyens de liaison permet de transmettre aux organes d'absorption d'énergie et aux longerons les efforts subis par les extrémités de la poutre lors de chocs en coin suivant une direction horizontale faisant un angle pouvant atteindre voire dépasser +/-30° par rapport à l'axe longitudinal du véhicule, ceci sans déplacement de la poutre transversalement au véhicule.

On notera que l'homme du métier saura optimiser les courbures de la poutre 14 et des moyens de liaison 32, 34 pour obtenir les caractéristiques de déformation souhaitées en fonction des dimensions de cette poutre et de ces moyens de liaison ainsi que des matériaux utilisés pour fabriquer ces derniers. A cette fin, l'homme du métier pourra utiliser des outils informatiques de simulation de chocs.

Les liaisons encastrement permettent de conserver l'alignement des organes d'absorption d'énergie et des longerons en cas de chocs à des vitesses moyennes et élevées.

Les moyens de liaison évasés permettent d'éviter la perforation de la poutre par les organes d'absorption d'énergie lors de chocs à des vitesses élevées, si bien que le véhicule peut se déformer sans augmentation de son agressivité.

## Revendications

1. Pare-chocs pour véhicule automobile, du type comprenant une poutre (14) destinée à être reliée à deux longerons (16, 18) du véhicule par l'intermédiaire de deux organes d'absorption d'énergie (20, 22), la poutre (14) ayant une forme générale courbe dans un plan sensiblement horizontal délimitée par une paroi avant (24) de courbure sortante et une paroi arrière (26) de courbure rentrante reliée aux organes d'absorption d'énergie (20, 22), caractérisé en ce que chaque organe d'absorption d'énergie (20, 22) est relié à la poutre (14) par des moyens (32, 34) formant une liaison encastrement, ces moyens de liaison (32, 34) ayant une forme générale évasée dans un plan sensiblement horizontal, cette forme évasée s'élargissant vers la paroi arrière (26) de la poutre et étant délimitée par deux parois latérales courbes intérieure (36,38) et extérieure (40, 42) reliées à la paroi arrière (26) de la poutre, les parois latérales intérieures (36, 38) des moyens de liaison délimitant avec la paroi arrière (26) de la poutre une arche de courbure rentrante sans point anguleux.

2. Pare-chocs selon la revendication 1, caractérisé en ce que la poutre (14), les organes d'absorption (20, 22) et les moyens de liaison (32, 34) ont chacune une forme générale en caisson de section transversale sensiblement polygonale.

3. Pare-chocs selon la revendication 1 ou 2, caractérisé en ce que les moyens de liaison (32, 34) sont venus de matière avec la poutre (14) et les organes d'absorption d'énergie (20, 22).

4. Pare-chocs selon la revendication 3, caractérisé en ce que la paroi arrière (26) de la poutre (14) comporte, d'une part, une partie centrale (26A) se prolongeant par les parois latérales intérieures (36, 38) des moyens de liaison (32, 34) et des parois latérales intérieures (44, 46) des organes d'absorption d'énergie (20, 22), et d'autre part, deux parties d'extrémité (26B) se prolongeant par les parois latérales extérieures (40, 42) des moyens de liaison (32, 34) et des parois latérales extérieures (48, 50) des organes d'absorption d'énergie (20, 22).

5. Pare-chocs selon la revendication 4, caractérisé en ce que la poutre (14), les organes d'absorption d'energie (20, 22) et les moyens de liaison (32, 34) comprennent deux parois communes de dessus (28) et de dessous (30), sensiblement planes, reliant les parois avant (24) et arrière (26) de la poutre (14) et fixées sur des saillies de liaison (S1, S2) de ces parois avant (24) et arrière (26).

6. Pare-chocs selon la revendication 4, caractérisé en ce qu'il comporte un organe en caisson (52) d'une seule pièce, ayant la forme générale de la poutre, les parois latérales intérieures (36, 38, 44, 46) des moyens de liaison (32, 34) et des organes d'absorption d'énergie (20, 22) ainsi que la partie centrale (26A) de la paroi arrière de la poutre étant formées par les extrémités d'une paroi arrière de l'organe en caisson (52) partiellement séparées de cet organe en caisson (52), les parois latérales extérieures (40, 42, 48, 50) des moyens de liaison (32, 34) et des organes d'absorption d'énergie (20, 22) ainsi que les parties d'extrémité (26B) de la paroi arrière (26) de la poutre étant formées par deux éléments (54, 56) fixés sur des bords découpés (D) de parois de dessus et de dessous de l'organe en caisson (52) adjacentes à la paroi arrière de cet organe en caisson (52).

7. Pare-chocs selon la revendication 1 ou 2, caractérisé en ce que les moyens de liaison (32, 34) sont venus de matière avec les organes d'absorption d'énergie (20, 22).

8. Pare-chocs selon la revendication 7, caractérisé en ce que la poutre (14) est constituée par un organe en caisson d'une seule pièce, en ce que les organes d'absorption d'énergie (20, 22) sont munis de parois latérales (44 à 50) prolongées par les parois latérales (36 à 42) des moyens de liaison (32, 34), et en ce que chaque organe d'absorption d'énergie (20, 22) est constitué par un organe en caisson d'une seule pièce, les moyens de liaison (32, 34) étant constitués par une extrémité de cet organe en caisson évasée et fixée sur la poutre (14).

9. Pare-chocs selon la revendication 1 ou 2, caractérisé en ce que les moyens de liaison (32, 34) sont venus de matière avec la poutre (14).

10. Pare-chocs selon la revendication 9, caractérisé en ce que la poutre (14) est constituée par un organe en caisson d'une seule pièce, et en ce que chaque organe d'absorption d'énergie (20, 22) est constitué par un organe en caisson d'une seule pièce fixé sur les moyens de liaison (32, 34) correspondants venus de matière avec la poutre.

11. Procédé de fabrication d'un pare-chocs selon la revendication 5, caractérisé en ce que :
- on réalise et on courbe quatre éléments métalliques formant, le premier, la paroi avant (24) de la poutre, le second, la partie centrale (26A) de la paroi arrière de la poutre et les parois latérales intérieures (36, 38, 44, 46) des moyens de liaison (32, 34) et des organes d'absorption d'énergie (20, 22), et les troisième et quatrième, les deux parties d'extrémité (26B) de la paroi arrière de la poutre et les parois latérales extérieures (40, 42, 48, 50) des moyens de liaison (32, 34) et des organes d'absorption d'énergie (20, 22),
- on découpe deux éléments sensiblement plats en tôle métallique formant les parois communes de dessus (28) et de dessous (30), et
- on fixe les éléments extrudés et découpés les uns aux autres.

12. Procédé pour la fabrication d'un pare-chocs selon la revendication 6, caractérisé en ce que :
- on réalise un organe métallique en caisson (52),
- on courbe cet organe en caisson (52) pour lui donner la forme générale de la poutre (14),
- on sépare partiellement de l'organe en caisson (52) les extrémités d'une paroi arrière de cet organe en caisson (52) par découpage partiel de parois de dessus et de dessous de l'organe en caisson (52) adjacentes à la paroi arrière de cet organe en caisson (52),
- on courbe les extrémités partiellement séparées,
- on réalise et on courbe deux éléments métalliques (54, 56) formant les parois latérales extérieures (40, 42, 48, 50) des moyens de liaison (32, 34) et des organes d'absorption d'énergie (20, 22) ainsi que les parties d'extrémité (26B) de la paroi arrière de la poutre, et
- on fixe les éléments extrudés (54, 56) sur des bords découpés (D) des parois de dessus et de dessous de l'organe en caisson (52).

13. Procédé de fabrication d'un pare-chocs selon la revendication 8, caractérisé en ce que :
- on réalise et on courbe un premier organe métallique en caisson formant la poutre (14),
- on réalise des premier et troisième organes métalliques en caisson formant les organes d'absorption d'énergie (20, 22) et les moyens de liaison (32, 34), ces moyens de liaison (32, 34) étant formés en évasant une extrémité des deuxième et troisième organes en caisson par hydroformage ou séparation partielle de parois latérales de cette extrémité, et
- on fixe les trois organes en caisson les uns aux autres.

14. Procédé de fabrication d'un pare-chocs selon la revendication 8, caractérisé en ce que :
- on réalise et on courbe un organe métallique en caisson formant la poutre (14),
- on réalise des deuxième et troisième organes métalliques en caisson formant les organes d'absorption d'énergie (20, 22), et
- on fixe les trois organes en caisson les uns aux autres.
